(19) Europäisches Patentamt / European Patent Office / Office européen des brevets

(11) **EP 2 178 222 A1**

(12) **EUROPEAN PATENT APPLICATION**

(43) Date of publication:
**21.04.2010 Bulletin 2010/16**

(51) Int Cl.:
*H04B 7/04* *(2006.01)*   *H04B 17/00* *(2006.01)*

(21) Application number: **09012683.0**

(22) Date of filing: **07.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **20.10.2008 JP 2008269706**

(71) Applicant: **NTT DoCoMo, Inc.**
**Chiyoda-ku**
**Tokyo 100-6150 (JP)**

(72) Inventors:
• **Okano, Yoshiki**
  **Tokyo 100-6150 (JP)**

• **Kurita, Daisuke**
  **Tokyo 100-6150 (JP)**
• **Nakamatsu, Shin**
  **Tokyo 100-6150 (JP)**
• **Okada, Takashi**
  **Tokyo 100-6150 (JP)**

(74) Representative: **Sparing Röhl Henseler**
**Patentanwälte**
**European Patent Attorneys**
**Postfach 14 04 43**
**40074 Düsseldorf (DE)**

(54) **Multi-antenna measurement method and multi-antenna measurement system**

(57)    There is provided a multi-antenna measurement method of measuring a device under test 1 having at least two receive antennas and capable of considering the spatial correlation between antennas in a simpler configuration. Two different uncorrelated signal sequences "a" and "b" are generated by a pseudo base transceiver station. These signal sequences "a" and "b" are transmitted as radio waves from positions (positions of transmitting antenna elements 31 and 32) of the two base angles of the isosceles triangle toward the device under test 1 provided at a position of the apex angle respectively to measure the received antennas by receive antennas of the device under test 1. This method is easy to calibrate and can consider the spatial correlation between antennas in a simpler configuration.

*FIG. 5*

## Description

The present invention relates to a multi-antenna measurement method and a multi-antenna measurement system for measuring multi-antenna performance in a simple manner.

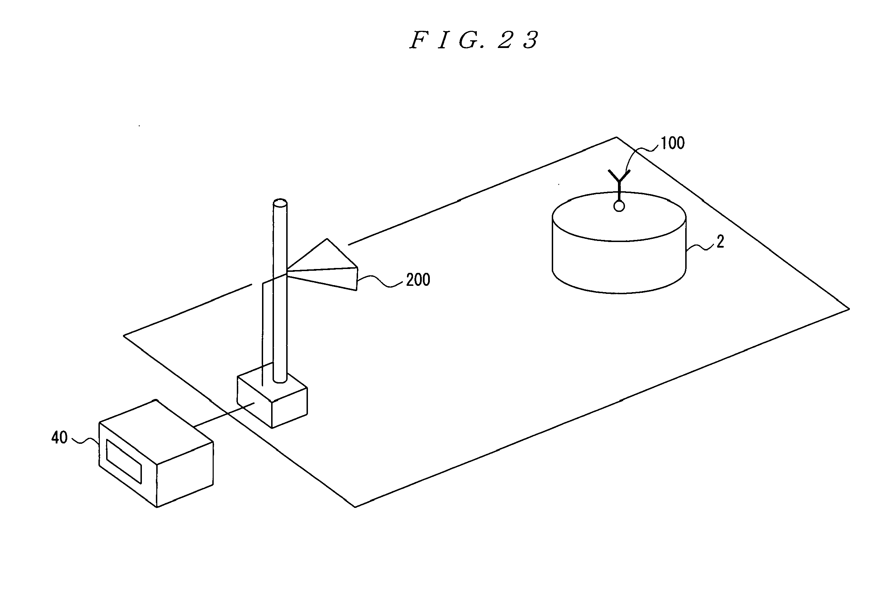

In general, the performance of antennas for use in communication is evaluated by measuring radiation patterns in a radio anechoic chamber. With reference to FIG. 23, an example of measuring the radiation pattern of the communication antenna will be described.

In FIG. 23, the radiation pattern is measured as follows. More specifically, first, an antenna under test 100 is mounted on a turntable 2. Next, an electrical signal supplied from an external signal source 40 is emitted from a facing antenna 200 as a radio wave. Then, the antenna under test 100 on the turntable 2 is rotated. At this time, the power received by the antenna under test 100 is measured at each angle. The above method achieves the measurement of the radiation pattern of the antenna for use in communication.

Incidentally, regarding mobile terminals, as an overall radio performance evaluation, including an antenna, CTIA Test Plan for Mobile Station OTA Performance Revision 2.2 specifies two measurement methods: an entire space radiated power measurement for measuring, in the entire space, the power radiated from an actually operating mobile terminal, with the use of a pseudo base transceiver station; and an entire space receiver sensitivity measurement for measuring, in the entire space, the reception sensitivity with respect to an incoming wave from each direction (see CTIA Test Plan for Mobile Station OTA Performance Revision 2.2, at http://fites.ctia.org/.../CTIA_TestPlaforMobile StationOTAPerformanceRevision_2_2_2_Final_121808.pdt). The above measurement system and measurement method allow the evaluation of the antenna directivity and the transmitting/receiving performance of a mobile terminal as three dimensional characteristics.

However, regarding the multi-antenna used for receive diversity using two or more antennas as its component, or the MIMO (Multiple Input Multiple Output) transmission, the spatial correlation between antennas needs to be considered in addition to the radiation pattern of an individual antenna and the transmission and reception performance with respect to the entire space. Therefore, the performance of the antenna and the mobile terminal has to be evaluated in a measurement environment in consideration of the angular spread of incoming waves with respect to the receive antenna in the same manner as the actual propagation environment.

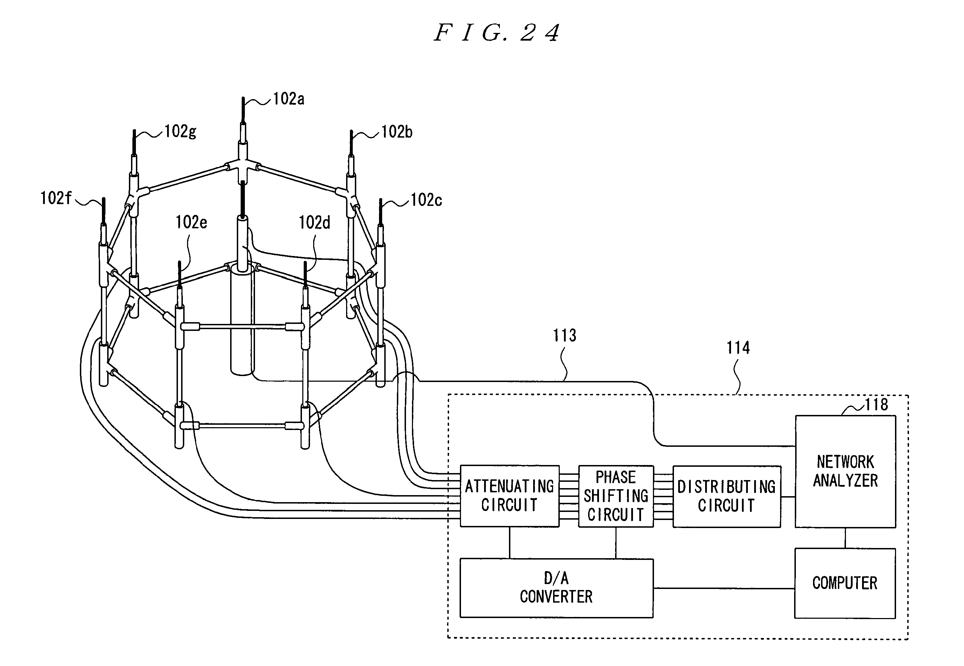

In addition, for example, JP 2005-227213 A discloses an antenna evaluation device for simulating the angular spread of the incoming wave. With reference to FIG. 24, the antenna evaluation device will be described. As illustrated in FIG. 24, multiple transmitting antennas 102a to 102g are arranged on the circumference. An attenuator controls the amplitude of radio waves emitted from the transmitting antennas 102a to 102g, and a phase shifter controls the phases thereof. With such a configuration, the quality of the multi-path environment configured in the vicinity of the center of the circle by overlapping the radio waves is controlled. In this process, an antenna 110 to be measured such as a diversity antenna is arranged in the vicinity of the center of the circle, thereby enabling the performance evaluation in consideration of the spatial correlation between the antennas. Specifically, in FIG. 24, multiple waves received by the antenna 110 to be measured are inputted into a network analyzer 118 in a control/measurement section 114 via a cable 113 and are then displayed on a screen of the network analyzer 118.

According to the antenna evaluation device disclosed in JP 2005-227213 A, the number of signals the amplitude and phase of which have to be controlled is the same as the total number of the transmitting antennas arranged on the circumference. For this reason, there is provided the same number of the attenuators and phase shifters as that of transmitting antennas, so those attenuators and phase shifters are used to control the amplitude and phase for each transmitting antenna. Thus, it is not easy to calibrate the antenna evaluation device disclosed in JP 2005-227213 A.

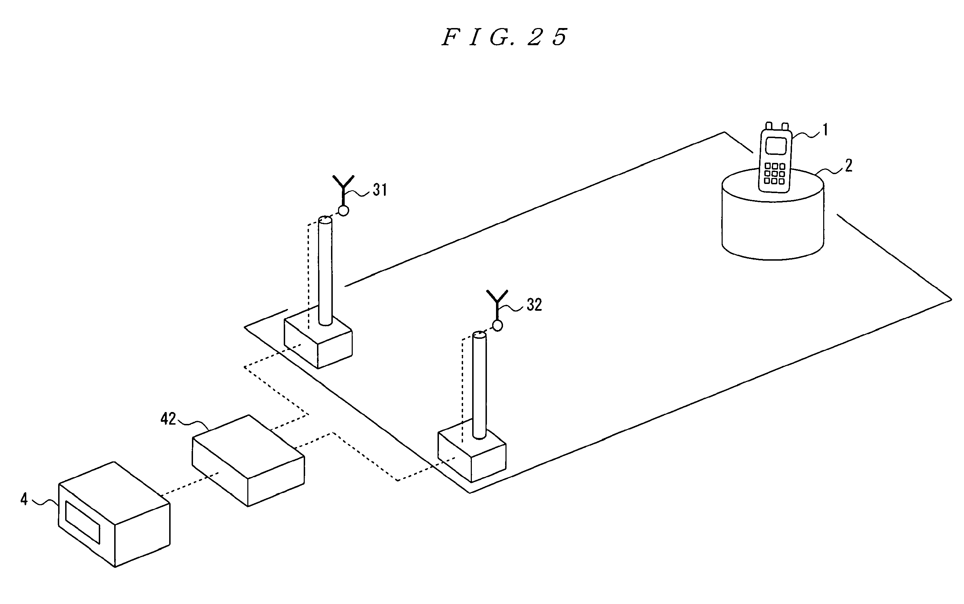

A configuration illustrated in FIG. 25 is considered as a simple antenna measurement system capable of considering the spatial correlation between antennas with a small number of transmitting antennas. In FIG. 25, a signal from a pseudo base transceiver station 4 is passed via an amplitude-phase control device 42 to transmitting antenna elements 31 and 32, from which the signals are transmitted as radio waves. Then, the multi-path environment is generated in the vicinity of a device under test 1. Additionally, for example, "cellular phone performance test system" discloses an amplitude-phase control device achieving such measurement method (see <URL:hftp://www.toyo.co.jp/paw/SR5500.html>, Oct., 10, 2008). However, in this case, a complicated amplitude-phase control device 42 is necessary, and in addition, the antenna performance evaluation is limited to the fading environment and a moving state where the received signal strength fluctuates, and thus the performance evaluation in a stationary state is not achievable.

It is therefore an object of the present invention is to provide a multi-antenna measurement method and a multi-antenna measurement system, which are capable of considering the spatial correlation between antennas with easy calibration and a simpler configuration.

The present invention provides a multi-antenna measurement method of measuring a device under test having at least two receive antennas. The multi-antenna measurement method includes transmitting radio waves of two different uncorrelated signal sequences from positions of two base angles of an isosceles triangle toward the device under test arranged at a position of an apex angle respectively, and measuring a received signal with a receiving antenna of the device under test. This method is easy to calibrate and can consider the spatial correlation between antennas in a simpler configuration.

When the received power is measured, the device under test may be rotated around a predetermined rotating axis. The rotation of the device under test facilitates measuring the antenna characteristics at various angles.

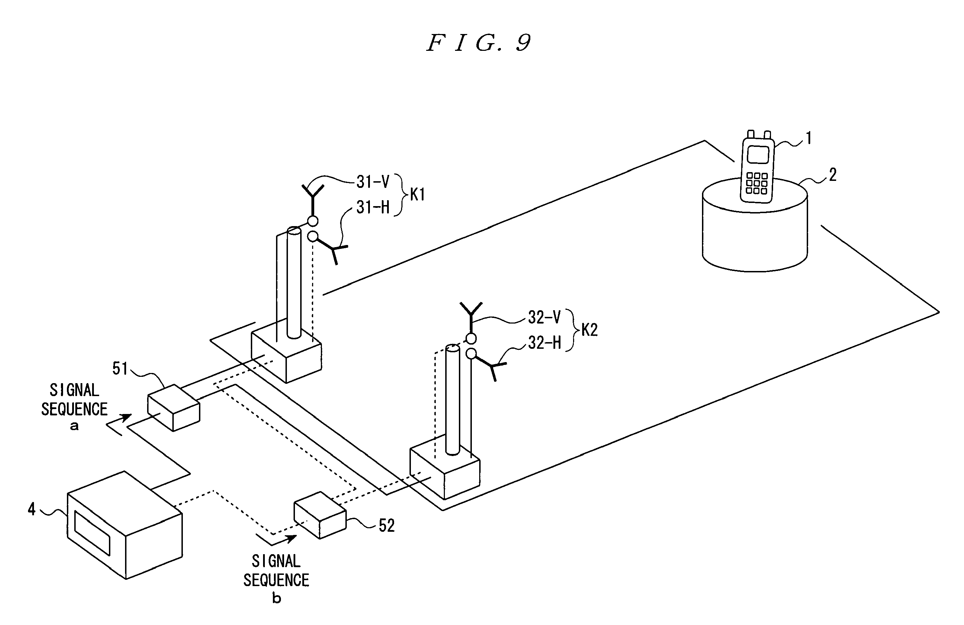

One of the two different uncorrelated signal sequences may be transmitted as a vertically polarized wave from one (e.g., position of the transmitting antenna element 31-V in FIG. 9) of the positions of one of the two base angles and as a horizontally polarized wave from the other (e.g., position of the transmitting antenna element 32-H in FIG. 9) of the positions thereof respectively; and the other of the two different uncorrelated signal sequences may be transmitted as a horizontally polarized wave from one (e.g., position of the transmitting antenna element 31-H in FIG. 9) of the positions of one of the two base angles thereof and as a vertically polarized wave from the other (e.g., position of the transmitting antenna element 32-V in FIG. 9) of the positions thereof respectively. This method facilitates the multi-antenna measurement including the antenna correlation as well in the state of considering the antenna polarization characteristics.

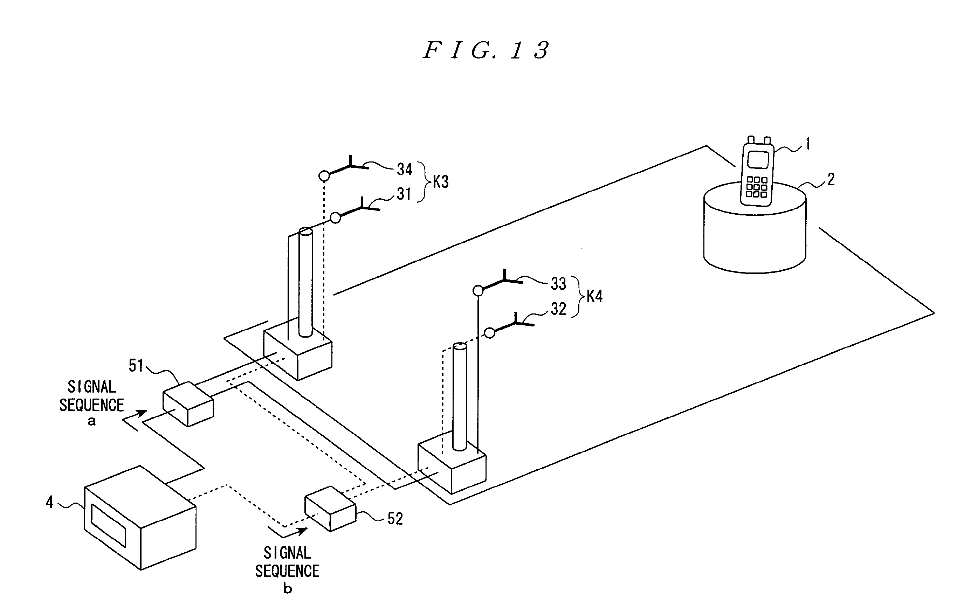

One of the two different uncorrelated signal sequences (e.g., signal sequence "a" in FIG. 13) may be transmitted from one (e.g., position of the transmitting antenna element 31 in FIG. 13) of the positions of the upper and lower positions spaced apart in the vertical direction from one of the positions of the two base angles of the isosceles triangle and from the other (e.g., position of the transmitting antenna element 33 in FIG. 13) of the positions of the upper and lower positions spaced apart in the vertical direction from the other of the positions of the two base angles thereof; and the other (e.g., signal sequence "b" in FIG. 13) of the two different uncorrelated signal sequences may be transmitted from the other (e.g., position of the transmitting antenna element 34 in FIG. 13) of the positions of the upper and lower positions spaced apart in the vertical direction from one of the positions of the two base angles of the isosceles triangle and from one (e.g., position of the transmitting antenna element 32 in FIG. 13) of the positions of the upper and lower positions spaced apart in the vertical direction from the other of the positions of the two base angles thereof. This method facilitates the multi-antenna measurement in the state of considering not only the horizontal angular spread but also the vertical angular spread.

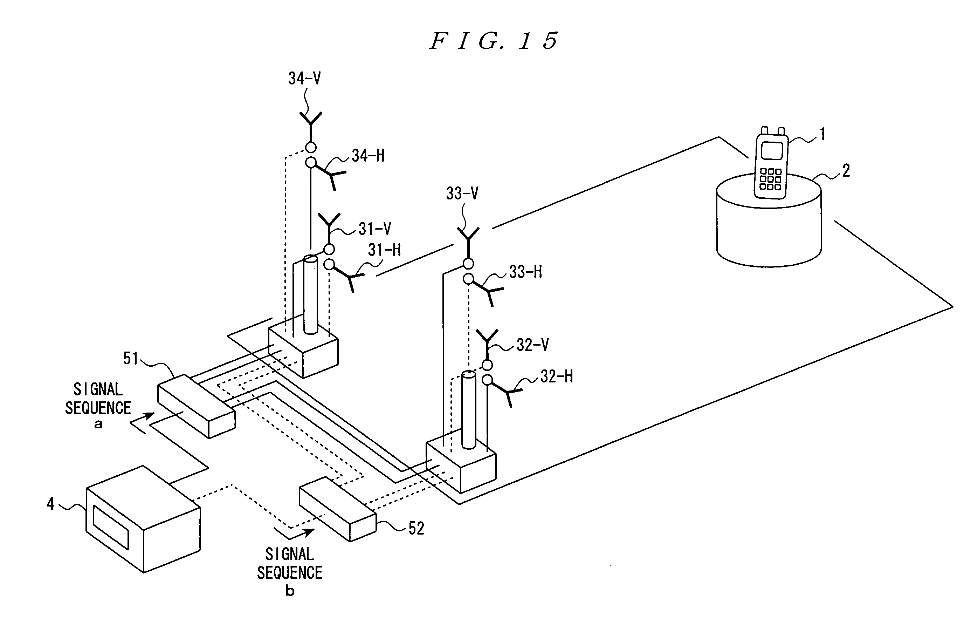

Further, one (e.g., signal sequence "a" in FIG. 15) of the two different uncorrelated signal sequences may be transmitted

as vertically polarized waves from one (e.g., position of the transmitting antenna element 33-V in FIG. 15) of the positions of the upper and lower positions spaced apart in the vertical direction from one of the positions of the two base angles of the isosceles triangle;

as horizontally polarized waves from the other (e.g., position of the transmitting antenna element 32-H in FIG. 15) of the positions of the upper and lower positions spaced apart in the vertical direction;

as horizontally polarized waves from one (e.g., position of the transmitting antenna element 34-H in FIG. 15) of the positions of the upper and lower positions spaced apart in the vertical direction from the other of the positions of the two base angles of the isosceles triangle; and

as vertically polarized waves from the other (e.g., position of the transmitting antenna element 31-V in FIG. 15) of the positions of the upper and lower positions spaced apart in the vertical direction; and

the other (e.g., signal sequence "b" in FIG. 15) of the two different uncorrelated signal sequences may be transmitted

as vertically polarized waves from one (e.g., position of the transmitting antenna element 34-V in FIG. 15) of the positions of the positions of the upper and lower positions spaced apart in the vertical direction from the other of the positions of the two base angles of the isosceles triangle;

as horizontally polarized waves from the other (e.g., position of the transmitting antenna element 31-H in FIG. 15) of the positions of the upper and lower positions spaced apart in the vertical direction;

as horizontally polarized waves from one (e.g., position of the transmitting antenna element 33-H in FIG. 15) of the positions of the upper and lower positions spaced apart in the vertical direction from one of the positions of the two base angles of the isosceles triangle; and

as vertically polarized waves from the other (e.g., position of the transmitting antenna element 32-V in FIG. 15) of the positions of the upper and lower positions spaced apart in the vertical direction respectively. This method facilitates the multi-antenna measurement in the state of considering both the incoming wave polarization characteristics and the angular spread in a horizontal plane and in a vertical plane at the same time.

Moreover, received signal quality information indicating quality of the received signal is generated in the device under test, and the generated received signal quality information may be transmitted to a transmission side of the radio waves of the two different uncorrelated signal sequences. According to this method, the received signal quality information can be transmitted via the uplink, which eliminates the need to modify the device under test for obtaining the received signal quality information, thereby allowing the evaluation of the characteristics of an actually operating device under test.

Further, the received signal quality information may be demodulated at the transmission side of radio waves of the two different uncorrelated signal sequences, and an optimal modulation scheme and coding rate may be selected according to the demodulated received signal quality information. This method enables more faithful simulation of the communication state of an actual base transceiver station and mobile terminal having an adaptive modulation and demodulation function.

Moreover, at least one of strength of the signal to be transmitted and amount of interference included in the signal to be transmitted may be changed at the transmission side of radio waves of the two different uncorrelated signal sequences. This method enables a more faithful simulation of the radio wave state around the mobile terminal in the actual multi-cell environment with interference.

Further, measurement results by providing a reference antenna at a position of the apex angle of the isosceles triangle may be compared with measurement results by the device under test. This method enables an independent evaluation about the antenna portion of the device under test.

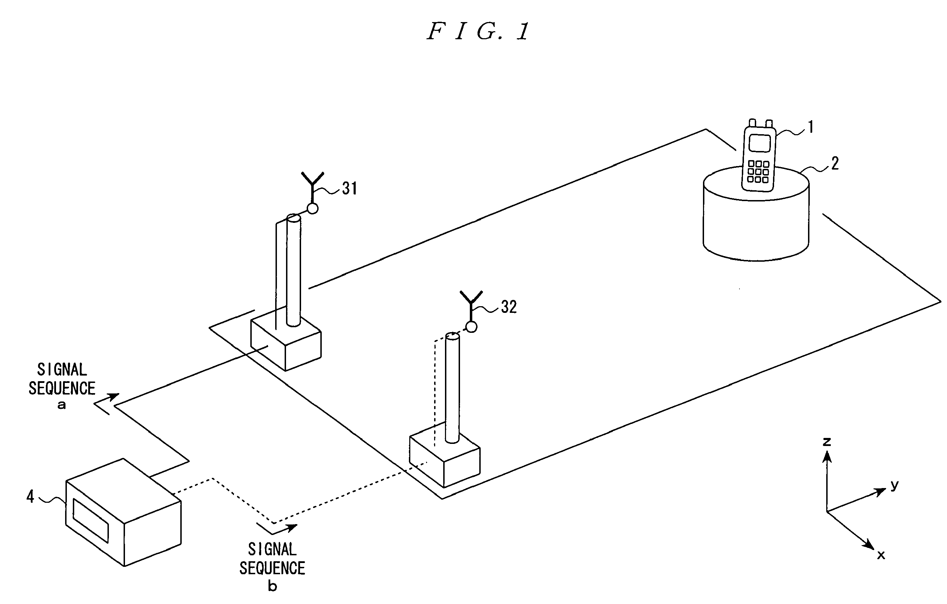

Moreover, the present invention provides a multi-antenna measurement system for measuring a device under test having at least two receive antennas. The system includes a transmitter (e.g., corresponding to the pseudo base transceiver station 4 and the transmitting antenna elements 31 and 32 in FIG. 1) which transmits radio waves of two different uncorrelated signal sequences from positions of two base angles of an isosceles triangle toward the device under test provided at a position of a apex angle respectively, and the system measures received signals with the receive antennas of the device under test. This system is easy to calibrate and can consider the spatial correlation between antennas in a simpler configuration.

According to the present invention, two different uncorrelated signal sequences are transmitted to enable evaluation of the multi-antenna performance considering the spatial correlation between antennas in a simple configuration. Moreover, the present invention eliminates the need to perform fading fluctuation on the signals supplied to the transmitting antennas. Therefore, the multi-antenna performance in a stationary state can be evaluated in a simpler way.

Further objects, advantages and embodiments may be taken from the following description.

FIG. 1 illustrates a functional configuration of an antenna measurement system for implementing a multi-antenna measurement method in accordance with a first embodiment;

FIG. 2A and FIG. 2B illustrate the external configuration of a device under test in FIG. 1;

FIG. 3 illustrates a configuration example of a multi-antenna provided in the device under test in FIG. 1;

FIG. 4 illustrates radiation pattern of the multi-antenna provided in the device under test in FIG. 1;

FIG. 5 illustrates a horizontal plane configuration of the antenna measurement system for implementing the multi-antenna measurement method in accordance with the first embodiment;

FIG. 6A and FIG. 6B illustrate the Laplace distribution model and a two-wave model;

FIG. 7A, FIG. 7B and FIG. 7C compare variations of antenna correlations with respect to terminal mounting angles related to configuration example 1 in accordance with the first embodiment;

FIG. 8 illustrates dependency of the antenna correlation on the distribution of incoming waves around a terminal and the distance between antenna elements;

FIG. 9 illustrates a situation of configuration example 2 in accordance with the first embodiment;

FIG. 10 compares variations of antenna correlations with respect to terminal mounting angles related to configuration example 2 in accordance with the first embodiment;

FIG. 11 illustrates a configuration of a case where different signal sequences are inputted into transmitting antennas related to the configuration example 2 in accordance with the first embodiment;

FIG. 12 illustrates signal sequences inputted into transmitting antennas related to the configuration example 2 in accordance with the first embodiment;

FIG. 13 illustrates a situation of configuration example 3 in accordance with the first embodiment;

FIG. 14 illustrates an allocation of signal sequences inputted into transmitting antennas related to the configuration example 3 in accordance with the first embodiment;

FIG. 15 illustrates a situation of configuration example 4 in accordance with the first embodiment;

FIG. 16 illustrates an allocation of signal sequences inputted into transmitting antennas related to the configuration example 4 in accordance with the first embodiment;

FIG. 17 illustrates a functional configuration of an antenna measurement system for implementing a multi-antenna measurement method in accordance with a second embodiment;

FIG. 18 illustrates an example of an internal configuration of a device under test;

FIG. 19 illustrates an example of an internal configuration of a pseudo base transceiver station;

FIG. 20 illustrates another example of the internal configuration of the device under test;

FIG. 21 illustrates a functional configuration of an antenna measurement system for implementing a multi-antenna measurement method in accordance with a third embodiment;

FIG. 22 illustrates a functional configuration of an antenna measurement system for implementing a multi-antenna measurement method in accordance with a fourth embodiment;

FIG. 23 is an explanatory drawing explaining radiation pattern measurement by the prior art;

FIG. 24 illustrates a functional configuration of an antenna measurement device by the prior art; and

FIG. 25 illustrates a simple antenna measurement system capable of considering spatial correlation between antennas with a small number of transmitting antennas.

Hereinafter, embodiments of the present invention will be described with reference to accompanying drawings. It should be noted that throughout the drawings, like reference numerals or characters refer to like components in the following description.

First Embodiment

With reference to FIG. 1, an antenna measurement method in accordance with a first embodiment will be described. FIG. 1 illustrates an example of an antenna measurement system for implementing the antenna measurement method in accordance with the first embodiment.

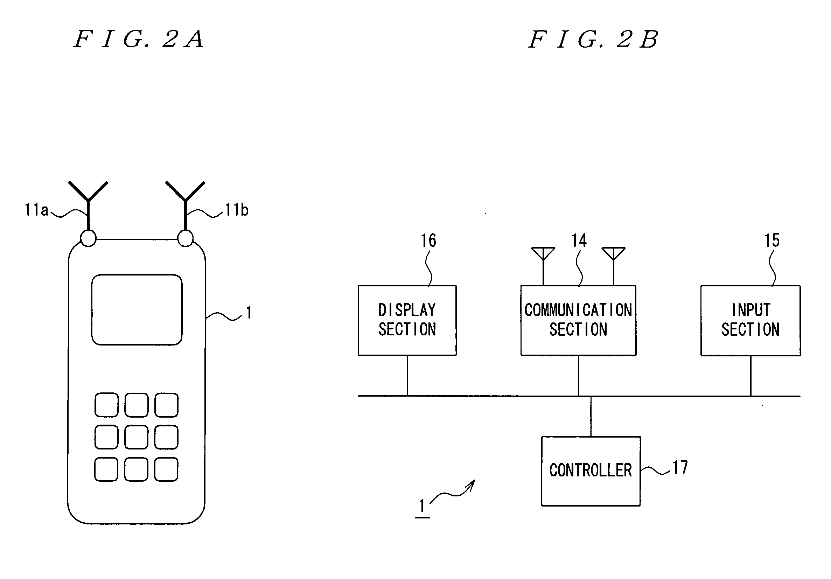

A device under test 1 in the antenna measurement method in accordance with the present invention is a mobile terminal such as a cellular phone having at least two antennas. FIG. 2A illustrates an external configuration example of the device under test 1. As illustrated in FIG. 2A, the device under test 1 has two antennas 11 a and 11 b included in a multi-antenna.

FIG. 2B illustrates an internal configuration example of the device under test 1. As illustrated in FIG. 2B, the device under test 1 includes a communication section 14 for controlling transmitting and receiving with antennas 11 a and 11 b, an input section 15 for inputting various kinds of information, a display section 16 for displaying various kinds of information, and a controller 17 for controlling each section.

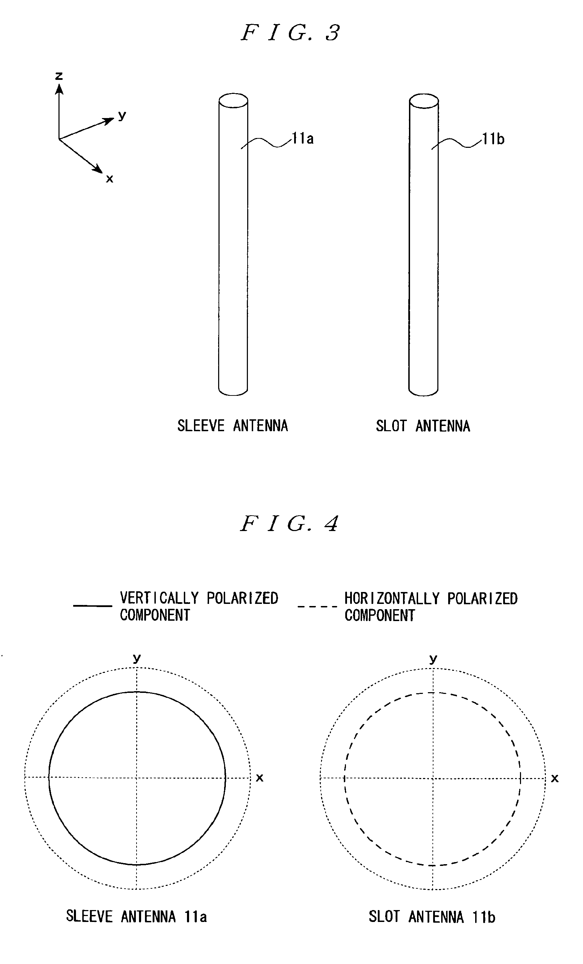

As illustrated in FIG. 3, in the present example, the antenna 11a is assumed to be a sleeve antenna, and the antenna 11 b is assumed to be a slot antenna. The radiation pattern in the horizontal plane (xy plane) of the antennas will be described with reference to FIG. 4. With reference to FIG. 4, the solid line indicates a vertically polarized component of the antenna 11a which is a sleeve antenna. The dashed line indicates a horizontally polarized component of the antenna 11 b which is a slot antenna.

Referring now back to FIG. 1, in the present example, the device under test 1 is mounted on the turntable 2. The turntable 2 has a predetermined rotating shaft, so that a mounted object is rotatable around the rotating axis. In this example, the rotating axis is arranged in a vertical direction (z direction) with respect to the ground surface. Therefore, the turntable 2 can horizontally rotate the device under test 1 mounted on the turntable 2. The provision of the turntable 2 facilitates the measurement of antenna characteristics at various angles.

The two transmitting antenna elements 31 and 32 are separated from each other at a predetermined distance far from the device under test 1. For example, the distance between the device under test 1 and the transmitting antenna elements 31 and 32 is assumed to be about 5 wavelengths respectively, and the distance between the two transmitting antennas is assumed to be about 3 wavelengths. In addition, the transmitting antenna elements 31 and 32 are arranged substantially as high as the device under test 1.

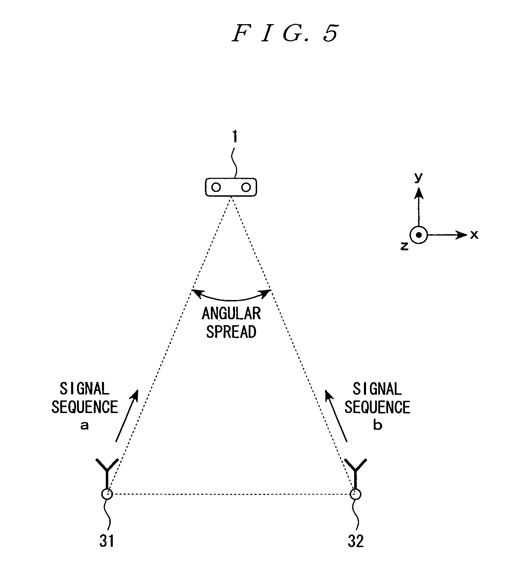

In a land mobile communication system including cellular phones, radio waves emitted from a base transceiver station are reflected, scattered, and diffracted by structures such as buildings and trees around the terminal, and reach the terminal with a spatial angular spread with respect to the terminal. In a multi-antenna having multiple antenna elements, correlation characteristics of the signals received by each antenna element affect the final characteristics of the received signal. Therefore, in order to evaluate the multi-antenna performance, it is necessary to consider the measurement system in which the angular spread is considered. For this reason, as illustrated in FIG. 5, in orderto simulate an environment where radio waves with an angular spread reach the device under test 1, the two transmitting antenna elements 31 and 32 are arranged to be spaced apart from each other.

The two transmitting antenna elements 31 and 32 each are arranged at a position of the point of a base angle of an isosceles triangle, whereas the device under test 1 is arranged at a position of the point of the apex angle of the isosceles triangle. That is, when the device under test 1 is arranged at a position of the point of the apex angle of an isosceles triangle, the transmitting antenna elements 31 and 32 each are arranged at a position of the point of a base angle thereof. In this example, it should be noted that the apex angle of the isosceles triangle is assumed to be about 30 degrees.

Referring now back to FIG. 1, the pseudo base transceiver station 4 generates two different uncorrelated signal sequences "a" and "b", and sends them to the transmitting antenna elements 31 and 32, respectively. In this situation, the two signals being uncorrelated means that the correlation coefficients of the two signals are sufficiently close to zero.

The pseudo base transceiver station 4 has functions necessary for performing predetermined communication with the device under test 1. For this reason, in the same manner as in an actual communication state, the device under test 1 and the pseudo base transceiver station 4 communicate with each other with radio signals propagating in the air via the transmitting antenna elements 31 and 32, and the receive antenna 11 a and 11 b provided in the device under test 1.

Hereinafter, by referring to a configuration example 1 and a configuration example 2, the description will be given of the multi-antenna measurement method in accordance with the first embodiment whereby the spatial correlation between antennas is considered.

(Configuration Example 1)

First, a consideration is given to simulate a cluster model having the two transmitting antennas forming the base angles of an arbitrary isosceles triangle, and having the same angular spread as the apex angle thereof.

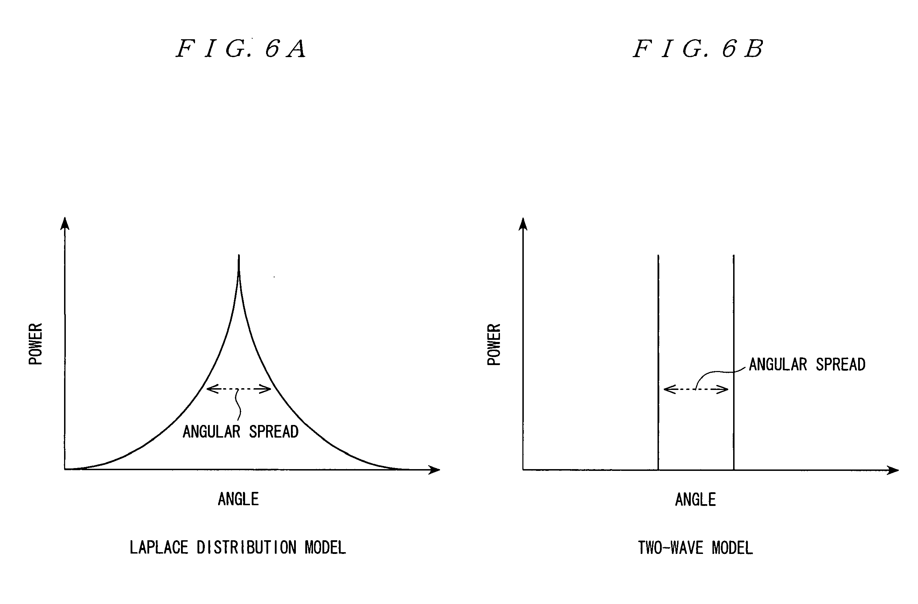

In FIG. 1, for example, the pseudo base transceiver station 4 generates two different uncorrelated signals, and sends them to the transmitting antenna elements 31 and 32 each via a connection cable. The antenna measurement system for implementing the multi-antenna measurement method in this state has already been described with reference to FIG. 1. FIG. 5 illustrates the horizontal plane, namely, the configuration viewed from above. In this state, the mutually uncorrelated signal sequences "a" and "b" are emitted from the two directions where the transmitting antenna elements 31 and 32 are mounted, toward the device under test 1. Therefore, the characteristics can be modeled by the two-wave model illustrated in FIG. 6B. Now, by referring back to FIG. 5, the angular spread matches the apex angle of the isosceles triangle.

Incidentally, in an actual multi-path environment, the radio waves in the range of an arbitrary angular spread can be handled as a cluster which is a sum of plane waves. This cluster can be modeled by the Laplace distribution P represented by the following expression (1) or FIG. 6A.

$$P = N_0 \exp(-\sqrt{2}|\phi\text{-AoA}|/\text{AS}) \dots (1)$$

In the above expression (1), No denotes a normalization coefficients, $\phi$ denotes an angle in a counterclockwise direction from the x axis in FIG. 5, AoA stands for Angle of Arrival, and AS stands for Angular Spread.

Here, the angular spread by the two-wave model is assumed to be the same as the angular spread by the Laplace distribution model. In a state where the radio waves based on each model are emitted from the broadside direction (-y direction in FIG. 5) of an array including the receive antenna of the device under test 1 as illustrated in FIG. 5, the correlation coefficients of the two signals received by the two receive antenna are obtained by the numerical calculation, when the terminal mounting angle is changed. Then, the results of the numerical calculation are compared with the results of actual measurements using the multi-antenna measurement system (FIG. 6A and FIG. 6B). It is understood that the spatial correlation between the antennas can be considered by the multi-antenna measurement method in the state of FIG. 6A and FIG. 6B, if the measurement results are sufficiently close to the numerical calculation results based on the Laplace distribution model representing the actual multi-path environment characteristics and the two-wave model representing the approximate expression thereof, or if the aspects of the changes in the correlation coefficient in the measurement results are sufficiently close to the aspects of the changes in the correlation coefficient in the numerical calculation results based on the Laplace distribution model and the two-wave model.

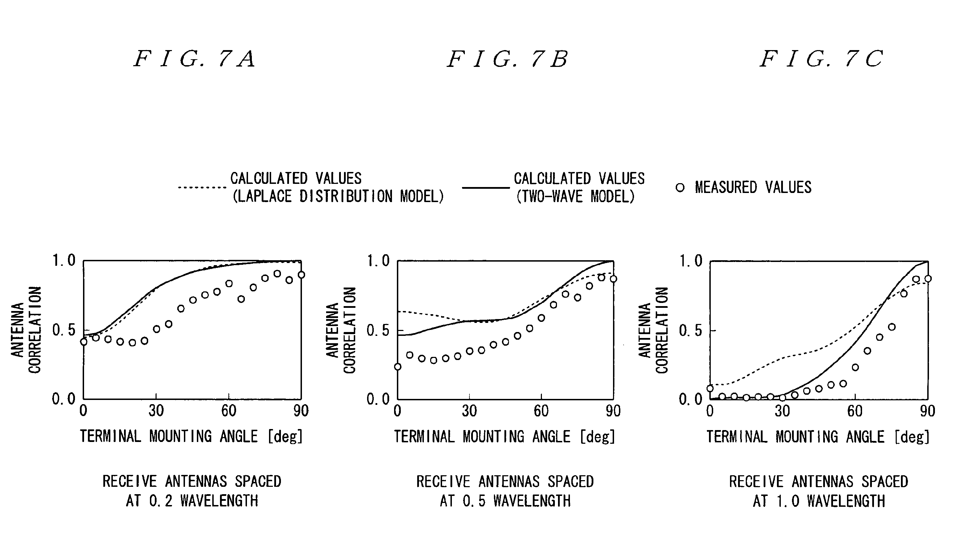

FIG. 7A, FIG. 7B and FIG. 7C illustrate the numerical calculation results and measurement results related to the correlation coefficients of the signals received by the two receive antenna included in the device under test 1, when radio waves based on the Laplace distribution model and the two-wave model are emitted to the device under test 1. Here, a half-wave dipole antenna which is the most basic antenna is used as the receive antenna, and three cases are employed such that the distance between the receive antenna is varied as follows: 0.2 wavelength (FIG. 7A), 0.5 wavelength (FIG. 7B), and 1.0 wavelength (FIG. 7C). In addition, the terminal mounting angle ranges from 0 degrees to 90 degrees due to coordinate symmetry. In FIG. 7A, FIG. 7B and FIG. 7C, the dashed line indicates the calculated values based on the Laplace distribution model, the solid line indicates the calculated values based on the two-wave model, and "O" indicate the measured values.

FIG. 7A, FIG. 7B and FIG. 7C exhibits that the measurement results well match the numerical calculation results based on the Laplace distribution model and the two-wave model independently of the distance between the receive antenna. Moreover, the aspects of the changes in the correlation coefficient with respect to the terminal mounting angle also well match such that the correlation coefficient is low in the 0-degree direction and is high in the 90-degree direction.

Here, advantages of considering the spatial correlation between antennas in the multi-antenna measurement method in the state of FIG. 1 will be described.

In the actual multi-path environment, there are cases in which not only the radio waves come from only one direction as illustrated in FIG. 1 but also the radio waves come from many directions. There is still another case where the radio waves come from several directions around the terminal. In light of this, the change in the antenna correlation is evaluated by simulating the case where the distribution of incoming waves around a terminal is changed.

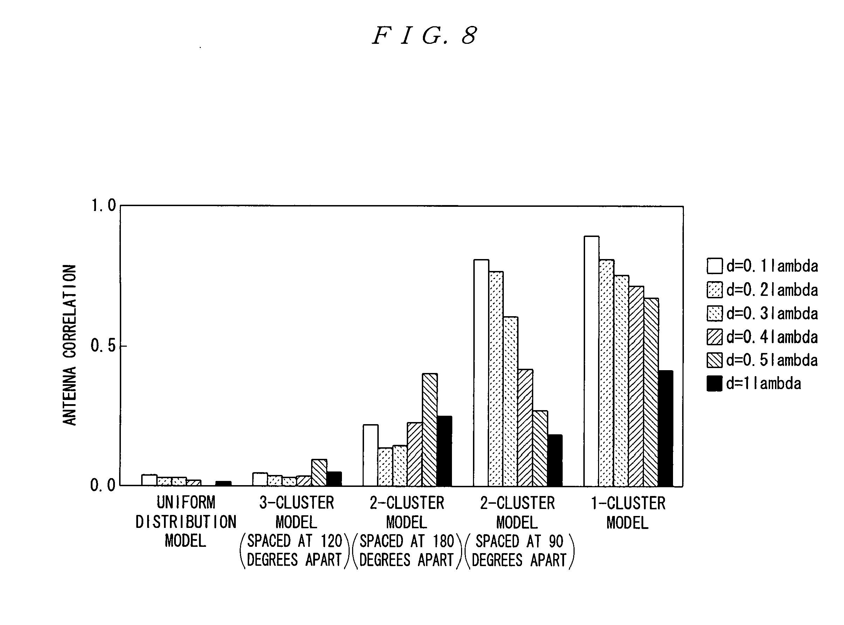

FIG. 8 illustrates the results of evaluation by simulating the changes in the antenna correlation in the case where the distribution of incoming waves around a terminal is changed. In FIG. 8, the distribution of incoming waves around a terminal uses five models: a uniform distribution model where the incoming waves come from several directions in a uniform manner; a three-cluster model where the incoming waves come from three different directions; a two-cluster model (spaced at 180 degrees apart) where the incoming waves come from two directions spaced at 180 degrees apart from each other; a two-cluster model (spaced at 90 degrees apart) where the incoming waves come from two directions spaced at 90 degrees apart from each other; and a one-cluster model where the incoming waves come from only one direction as in the state of FIG. 6A and FIG. 6B. Moreover, the element distance d between the receive antennas mounted on the device under test includes six wavelengths: 0.1 wavelengths (lambda), 0.2 wavelengths, 0.3 wavelengths, 0.4 wavelengths, 0.5 wavelengths, and 1 wavelength.

FIG. 8 exhibits that in the case of the uniform distribution model, the correlation coefficients become sufficiently low regardless of the element distance between the receive antennas. In the case of the three-cluster model, the correlation coefficients are low in all the element distances; and in the case of the two-cluster model (spaced at 180 degrees apart), the correlation coefficients slightly increase, but the antenna correlations are 0.5 or less, and thus the influence thereof is small. However, FIG. 8 also exhibits that in the case of the two-cluster model (spaced at 90 degrees apart) and the one-cluster model, the antenna correlations are higher than the other incoming wave distributions and the correlation coefficients are changed according to the element distance between the receive antennas.

When the element distance "d" is 0.1 that is the smallest wavelength, the correlation coefficient is as high as near 1; whereas when the element distance "d" is 1 that is the largest wavelength, the correlation coefficient is 0.5 or less. This trend is generally well known, and it is possible to confirm that the more the element distance of the receive antennas, the lower the correlation coefficient.

In such situations, although the absolute values of the antenna correlations differ between the two-cluster model (spaced at 90 degrees apart) and the one-cluster model, the changes in the correlation coefficient related to the element distance between the receive antennas are the same with each other. This exhibits that the merits and demerits of the performance about the antenna correlation of the receive antennas do not depend on the distribution of incoming waves around a terminal. In any propagation environment, an antenna with excellent capabilities has a low correlation coefficient, whereas an antenna with poor capabilities has a high correlation coefficient. Therefore, the merits and demerits of the performance of a receiving antenna in various propagation environments can be evaluated by implementing the multi-antenna measurement method in the state of FIG. 1 simulating the one-cluster model.

As described heretofore, with the multi-antenna measurement method in accordance with configuration example 1 of the first embodiment, the multi-antenna measurement including the antenna correlation is achievable in a simple manner.

(Configuration Example 2)

Next, a description will be given of the measurement of the multi-antenna performance in the state of considering the polarization characteristics of the receive antennas. For this end, in the present example, two pairs of transmitting antennas are employed as components, each having an antenna element emitting vertically polarized waves and an antenna element emitting horizontally polarized waves. More specifically, as illustrated in FIG. 9, one pair K1 includes a transmitting antenna element 31-V emitting vertically polarized waves and a transmitting antenna element 31-H emitting horizontally polarized waves; and the other pair K2 includes a transmitting antenna element 32-V emitting vertically polarized waves and a transmitting antenna element 32-H emitting horizontally polarized waves. Then, the transmitting antenna element 31-V emitting vertically polarized waves of the one pair K1 of transmitting antenna elements, and the transmitting antenna element 32-H emitting horizontally polarized waves of the other pair K2 thereof are connected to one terminal sending the signal sequence "a" of the pseudo base transceiver station 4 via one distributor 51. Moreover, the transmitting antenna element 31-H emitting horizontally polarized waves of the one pair K1 of transmitting antenna elements and the transmitting antenna element 32-V emitting vertically polarized waves of the other pair K2 thereof are connected to the other terminal sending the signal sequence "b" of the pseudo base transceiver station 4 via the other distributor 52.

More specifically, one of the two different uncorrelated signal sequences "a" and "b" is transmitted as a vertically polarized wave from one position (position of the transmitting antenna element 31-V in FIG. 9) of one of the two base angles of the isosceles triangle and as a horizontally polarized wave from the other position (e.g., position of the transmitting antenna element 32-H in FIG. 9). In addition, the other thereof is transmitted as a horizontally polarized wave from one position (position of the transmitting antenna element 31-H in FIG. 9) of one of the two base angles thereof and as a vertically polarized wave from the other position (e.g., position of the transmitting antenna element 32-V in FIG. 9).

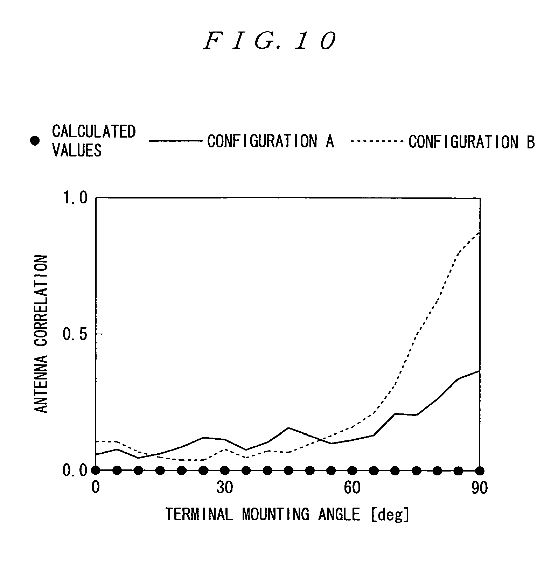

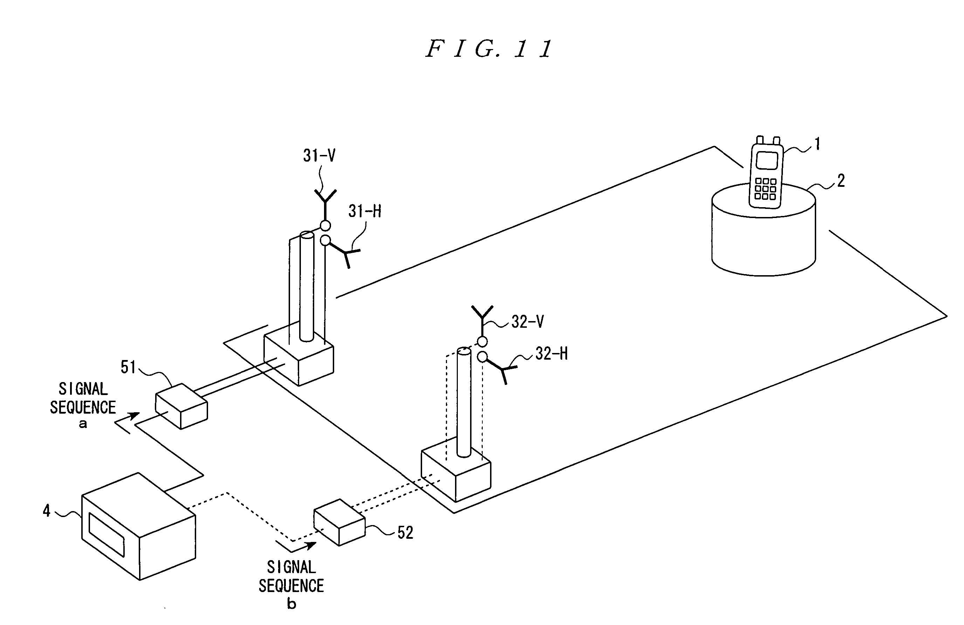

FIG. 10 illustrates measurement results related to the correlation coefficients of the signals received by the two receive antennas mounted on the device under test 1 in the case of using the multi-antenna measurement method in the state of FIG. 9. It should be noted that a sleeve antenna having omni-directional characteristics for vertically polarized waves and a slot antenna having omni-directional characteristics for horizontally polarized waves are employed for the receive antennas in accordance with the present example, as the most ideal polarized diversity antenna configuration. Moreover, in order to compare a combination of signal sequences inputted into the transmitting antennas, FIG. 10 also illustrates the measurement results in the case of using the multi-antenna measurement system in the state of FIG. 11.

The configuration illustrated in FIG. 11 differs from the configuration illustrated in FIG. 9 in that the transmitting antenna element 31-V emitting vertically polarized waves of one pair K1 of transmitting antenna elements and the transmitting antenna element 31-H emitting horizontally polarized waves of the same pair K1 thereof are connected to one terminal sending the signal sequence "a" of the pseudo base transceiver station 4 via one distributor 51. Moreover, the transmitting antenna element 32-H emitting horizontally polarized waves of the other pair K2 of transmitting antenna elements and the transmitting antenna element 32-V emitting vertically polarized waves of the same pair K2 are connected to the other terminal sending the signal sequence "b" of the pseudo base transceiver station 4 via the other distributor 52.

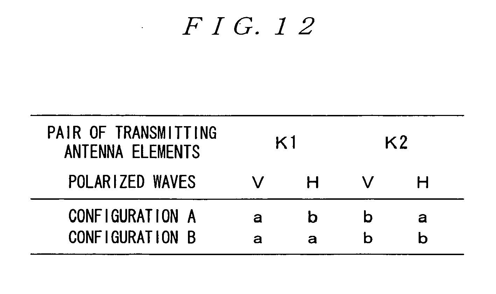

In FIG. 10, a configuration A indicates the connection state of FIG. 9 and a configuration B indicates the connection state of FIG. 11. These two configurations differ in the combination of signal sequences "a" and "b" inputted into the transmitting antennas as illustrated by the table of FIG. 12. In FIG. 12, polarized wave V denotes a vertically polarized wave and polarized wave H denotes a horizontally polarized wave, respectively. In addition, the terminal mounting angle is varied from 0 degrees to 90 degrees due to the coordinate symmetry. In FIG. 10, "•" indicate the numerical calculation results, the solid line indicates the measurement results based on the configuration A, and the dashed line indicates the measurement results based on the configuration B.

FIG. 10 exhibits that the numerical calculation results indicate that the antenna correlations are always zeros regardless of the terminal mounting angle. This is because the polarized diversity antennas, which includes a sleeve antenna receiving only the vertically polarized waves and a slot antenna receiving only the horizontally polarized waves, are used as the receive antennas. In this case, it is to be understood that the antenna correlation coefficients should always be zeros.

Meanwhile, the measurement results in the configuration B indicate that the antenna correlation is as sufficiently low as near zero when the terminal mounting angle is in the range of 0 degrees to 60 degrees, while the antenna correlation is as high as near 1 when the terminal mounting angle is around the 90 degrees, which is greatly different from the calculation results. On the other hand, although the measurement results in the configuration A indicate that the antenna correlation slightly increases when the terminal mounting angle is around the 90 degrees, the values are 0.5 or less, the range of which does not cause any problem.

Accordingly, in order to correctly measure the antenna correlation in the state of considering the polarization characteristics of the receiving antenna as well, a combination of signal sequences inputted into the transmitting antennas needs to be configured, as illustrated by the table in FIG. 12, such that one of the signal sequences is inputted into an element emitting vertically polarized waves of one pair of transmitting antennas and an element emitting horizontally polarized waves of the other pair thereof, and the other pair of the signal sequences is inputted into an element emitting horizontally polarized waves of one pair of transmitting antennas and an element emitting vertically polarized waves of the other pair.

As described above, the multi-antenna measurement method in accordance with configuration example 2 of the first embodiment facilitates the multi-antenna measurement also including the antenna correlation in the state of considering the antenna polarization characteristics.

(Configuration Example 3)

Next, a description will be given of the measurement of the multi-antenna performance in the state of considering the incoming wave angular spread not only on a horizontal plane but also on a vertical plane. For this end, in the present example, two pairs of transmitting antennas are employed such that one is arranged in an upper portion and the other is arranged in a lower portion, in the vertical direction. More specifically, as illustrated in FIG. 13, one pair K3 includes transmitting antenna elements 31 and 34 and the other pair K4 includes transmitting antenna elements 32 and 33. Then, the transmitting antenna element 31 arranged in the lower portion of the one pair K3 of transmitting antenna elements and the transmitting antenna element 33 arranged in the upper portion of the other pair K4 are connected to one terminal sending the signal sequence "a" of the pseudo base transceiver station 4 via one distributor 51. Moreover, the transmitting antenna element 34 arranged in the upper portion of the one pair K3 of transmitting antenna elements and the transmitting antenna element 32 arranged in the lower portion of the other pair K4 are connected to the other terminal sending the signal sequence "b" of the pseudo base transceiver station 4 via the other distributor 52.

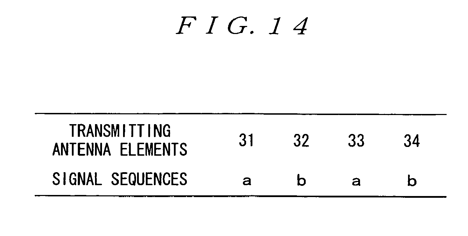

FIG. 14 illustrates an allocation of signal sequences "a" and "b" inputted into transmitting antenna elements 31 to 34 in the state of FIG. 13.

If each of the two different positions is spaced apart with each other in the vertical direction is an upper position and a lower position, the two transmitting antenna elements 33 and 34 are arranged in the upper positions, and the two transmitting antenna elements 31 and 32 are arranged in the lower positions, in the example illustrated in FIG. 13. It is to be noted that the lower position is approximately the same as the position in the vertical direction of the device under test 1.

More specifically, in the present example, one of the two different uncorrelated signal sequences (the signal sequence "a" in FIG. 13) is transmitted from one position (position of the transmitting antenna element 31 in FIG. 13) of the upper and lower positions spaced apart in the vertical direction from one of the positions of the two base angles of the isosceles triangle and from the other position (position of the transmitting antenna element 33 in FIG. 13) of the upper and lower positions spaced apart in the vertical direction from the other of the positions of the two base angles thereof; and the other (signal sequence "b" in FIG. 13) of the two different uncorrelated signal sequences is transmitted from the other position (position of the transmitting antenna element 34 in FIG. 13) of the upper and lower positions spaced apart in the vertical direction from one of the positions of the two base angles of the isosceles triangle and from one of the positions (position of the transmitting antenna element 32 in FIG. 13) of the upper and lower positions spaced apart in the vertical direction from the other of the positions of the two base angles thereof.

For example, "K. Kalliola et al., IEEE Trans. VT., vol. 51, no. 5, Sept. 2002" describes that the incoming wave distribution in the vertical plane around the terminal has a certain angular spread around the direction slightly deviated in an elevation angle direction from the horizontal plane.

Thus, it is made possible to accomplish with ease the multi-antenna measurement in the state of considering not only the horizontal angular spread but also the vertical angular spread, by arranging the transmitting antennas at the two different positions in the vertical direction. This allows the performance of the device under test 1 to be evaluated under a condition more faithful to the real propagation environment.

As described above, the multi-antenna measurement method in accordance with the configuration example 3 of the first embodiment allows the multi-antenna measurement with ease, in the state of considering the angular spread in the vertical plane of the incoming wave.

(Configuration Example 4)

Next, a description will be given of the measurement of the multi-antenna performance in the state of considering both the incoming wave polarization characteristics and the angular spread in a horizontal plane and that in a vertical plane at the same time. For this end, in the present example, a pair of transmitting antennas emitting vertically polarized waves and transmitting antennas emitting horizontally polarized waves which are arranged in an upper position and in a lower position in the vertical direction respectively, and another pair thereof are further arranged. More specifically, as illustrated in FIG. 15, a pair K12 of a transmitting antenna element 34-V emitting vertically polarized waves and a transmitting antenna element 34-H emitting horizontally polarized waves are arranged in an upper position; a pair K11 of a transmitting antenna element 31-V emitting vertically polarized waves and a transmitting antenna element 31-H emitting horizontally polarized waves are arranged in a lower position; further, a pair K13 of a transmitting antenna element 33-V emitting vertically polarized waves and a transmitting antenna element 33-H emitting horizontally polarized waves are arranged in an upper position; and a pair K14 of a transmitting antenna element 32-V emitting vertically polarized waves and a transmitting antenna element 32-H emitting horizontally polarized waves are arranged in a lower position. Then, the transmitting antenna elements arranged in the upper and lower positions each emitting vertically polarized waves and horizontally polarized waves, and the transmitting antenna elements arranged adjacent in the horizontal direction each emitting vertically polarized waves and horizontally polarized waves are connected to the terminals transmitting one of the two signal sequences "a" and "b" from the pseudo base transceiver station 4 via the distributors 51 and 52 so that mutually different signal sequences are inputted.

That is, one (signal sequence "a" in FIG. 15) of the two different uncorrelated signal sequences is transmitted as vertically polarized waves from one (position of the transmitting antenna element 33-V in FIG. 15) of the positions of the upper and lower positions spaced apart in the vertical direction from one of the positions of the two base angles of the isosceles triangle, as horizontally polarized waves from the other (position of the transmitting antenna element 32-H in FIG. 15) of the positions of the positions of the upper and lower positions spaced apart in the vertical direction, as horizontally polarized waves from one (position of the transmitting antenna element 34-H in FIG. 15) of the positions of the upper and lower positions spaced apart in the vertical direction from the other of the positions of the two base angles of the isosceles triangle, and as vertically polarized waves from the other (position of the transmitting antenna element 31-V in FIG. 15) of the positions of the upper and lower positions spaced apart in the vertical direction respectively. The other (e.g., signal sequence "b" in FIG. 15) of the positions of the two different uncorrelated signal sequences is transmitted as vertically polarized waves from one (position of the transmitting antenna element 34-V in FIG. 15) of the positions of the upper and lower positions spaced apart in the vertical direction from the other of the positions of the two base angles of the isosceles triangle, as horizontally polarized waves from the other (position of the transmitting antenna element 31-H in FIG. 15) of the positions of the upper and lower positions spaced apart in the vertical direction, as horizontally polarized waves from one (position of the transmitting antenna element 33-H in FIG. 15) of the positions of the upper and lower positions spaced apart in the vertical direction from one of the positions of the two base angles of the isosceles triangle, and as vertically polarized waves from the other (position of the transmitting antenna element 32-V in FIG. 15) of the positions of the upper and lower positions spaced apart in the vertical direction, respectively.

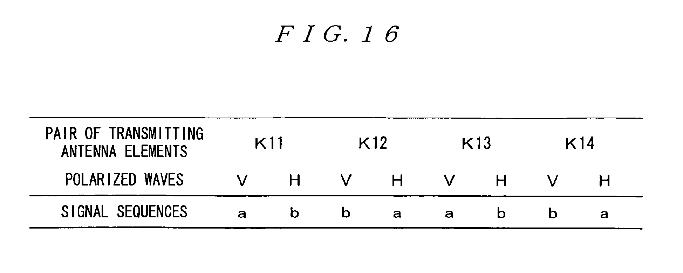

FIG. 16 illustrates an allocation of signal sequences "a" and "b" inputted into each transmitting antenna in the state of FIG. 15. In FIG. 16, polarized wave V denotes a vertically polarized wave and polarized wave H denotes a horizontally polarized wave respectively.

Thus, this method facilitates the multi-antenna measurement in the state of considering not only the horizontal angular spread but also the vertical angular spread by arranging the transmitting antennas in the two different positions in the vertical direction. This allows the performance of the device under test 1 to be evaluated under a condition more faithful to the real propagation environment.

As described above, the multi-antenna measurement method in accordance with configuration example 4 of the first embodiment facilitates the multi-antenna measurement in the state of considering both the incoming wave polarization characteristics and the angular spread in a horizontal plane and in a vertical plane at the same time.

Second Embodiment

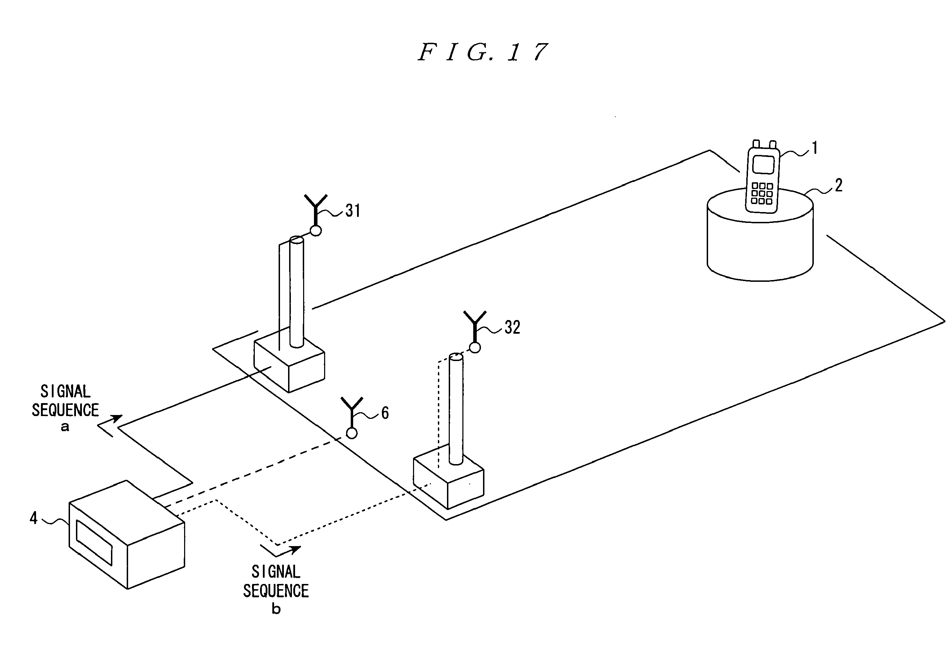

With reference to FIG. 17, an antenna measurement method in accordance with a second embodiment will be described. FIG. 17 illustrates an example of an antenna measurement system for implementing the antenna measurement method in accordance with the second embodiment. In the present embodiment, the measurement is performed in an environment having not only downlink radio waves transmitted from the transmitting antenna elements 31 and 32 to the device under test 1 but also uplink radio waves transmitted from device under test 1 to the pseudo base transceiver station 4.

(Configuration Example 1)

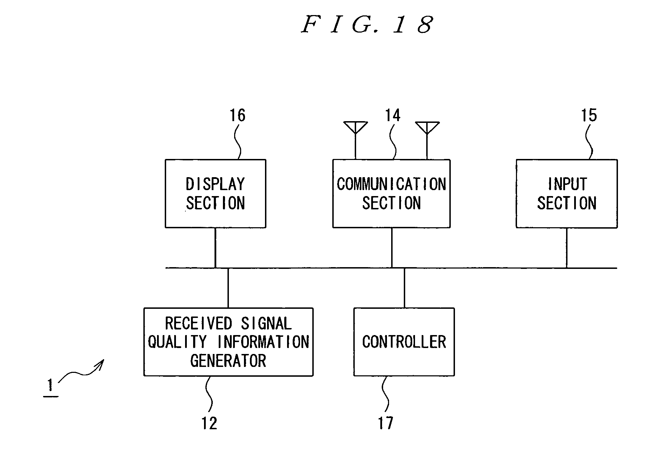

Herein, the device under test 1 includes a received signal quality information generator 12 which generates received signal quality information indicating quality of a received signal as illustrated in FIG. 18. The received signal quality information generated by the received signal quality information generator 12 is transmitted to the pseudo base transceiver station 4 via an uplink antenna 6. This is only different from the first embodiment and the rest (e.g., transmitting antenna arrangement, etc.) is the same, and thus the duplicate description is omitted.

The pseudo base transceiver station 4 converts data such as voice, music, characters, images, and videos into two different uncorrelated signals and transmits them as downlink signals from a plurality of transmitting antenna elements 31 and 32. When the device under test 1 receives the transmitted radio wave, the received signal quality information generator 12 in the device under test 1 generates received signal quality information about the radio wave. The device under test 1 transmits the generated received signal quality information to the pseudo base transceiver station 4 via the uplink. The uplink is the uplink used when the device under test 1 is actually used.

In this situation, the received signal quality information indicates quality of the received signal. The received signal quality information can include at least one of a Received Signal Strength Indicator (RSSI), a Received Signal Code Power (RSCP), a Signal to Noise Ratio (SNR), a Signal to Interference Ratio (SIR), a Signal to Interference and Noise Ratio (SINR), a Carrier to Noise Ratio (CNR), a Carrier to Interference Ratio (CIR), a Carrier to Interference and Noise Ratio (CINR), and the like.

The received signal quality information is obtainable via the uplink from the device under test 1 to the pseudo base transceiver station 4, which eliminates the need to modify the device under test 1 for obtaining the received signal quality information, thereby allowing the evaluation of the characteristics of an actually operating device under test 1. Moreover, the received signal quality information is obtainable with ease by obtaining the received signal quality information via the uplink from the device under test 1 to the pseudo base transceiver station 4.

In this process, effects of a gain and a correlation about antenna characteristics are reflected on the received signal quality information obtained by the pseudo base transceiver station 4. In addition, effects of receiver sensitivity and signal processing about the characteristics of a radio section of the device under test 1 are also reflected on the received signal quality information by using an actually operating mobile terminal. Therefore, the use of this received signal quality information enables an overall radio performance evaluation of a mobile terminal including an antenna under the condition of considering the effects of the incoming wave angular spread in an actual propagation environment as well as an evaluation of transmission characteristics between the base transceiver station and the device under test 1.

(Configuration Example 2)

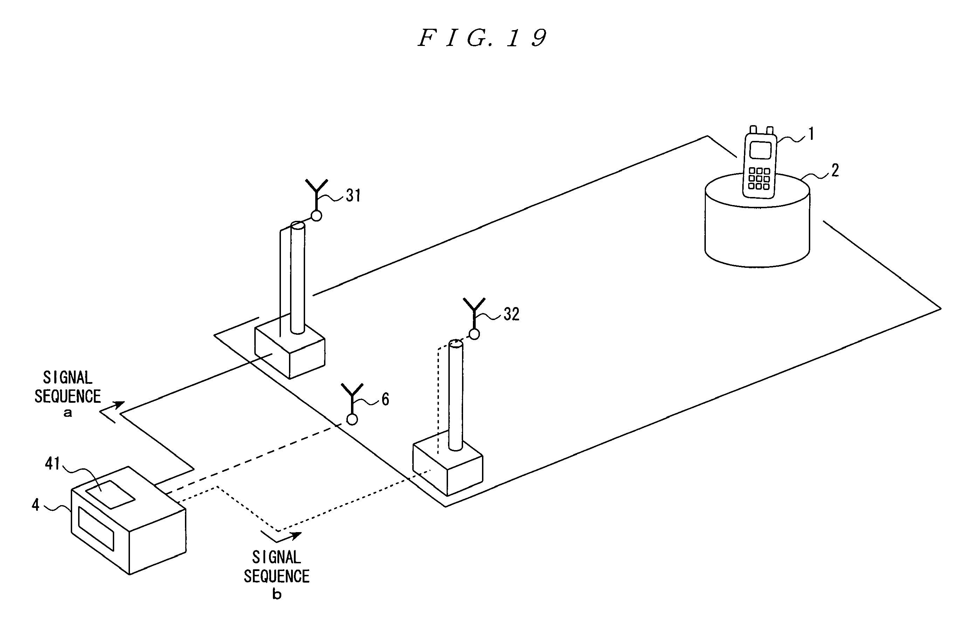

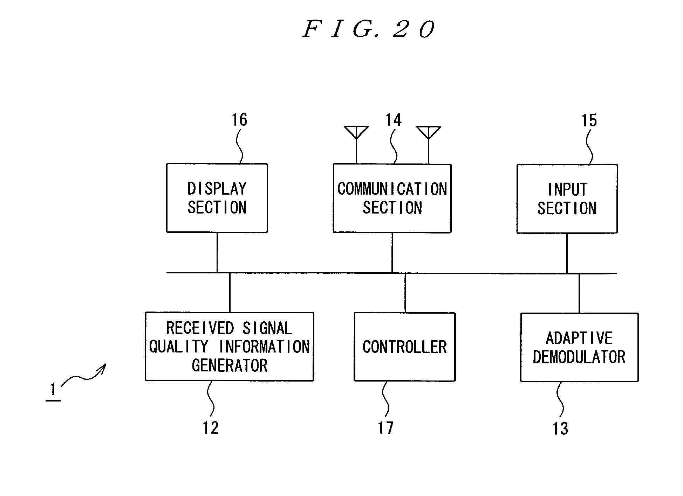

Meanwhile, as illustrated in FIG. 19, the pseudo base transceiver station 4 may include an adaptive modulator 41. This adaptive modulator 41 has a function of selecting an optimal modulation scheme and a coding rate according to the received signal quality information in the device under test 1. In this case, as illustrated in FIG. 20, an adaptive demodulator 13 corresponding to the adaptive modulator 41 of the pseudo base transceiver station 4 has to be provided in the device under test 1. This enables more faithful simulation of the communication state of an actual base transceiver station and a communication terminal having a so-called adaptive modulation and demodulation function.

For example, when an excellent received signal quality indicated by the received signal quality information is obtained from the device under test 1, the adaptive modulator 41 uses a modulation scheme with a higher information bit rate, and further sets the coding ratio to a high value. On the other hand, when a poor received signal quality indicated by the same information is obtained, the adaptive modulator 41 uses a modulation scheme with a lower information bit rate, and further sets the coding ratio to a low value. In order to determine whether the received signal quality is excellent or poor, the pseudo base transceiver station 4 and the device under test 1 may have a communication speed measuring unit for measuring the communication speed along the route from the pseudo base transceiver station 4 to the device under test 1.

Third Embodiment

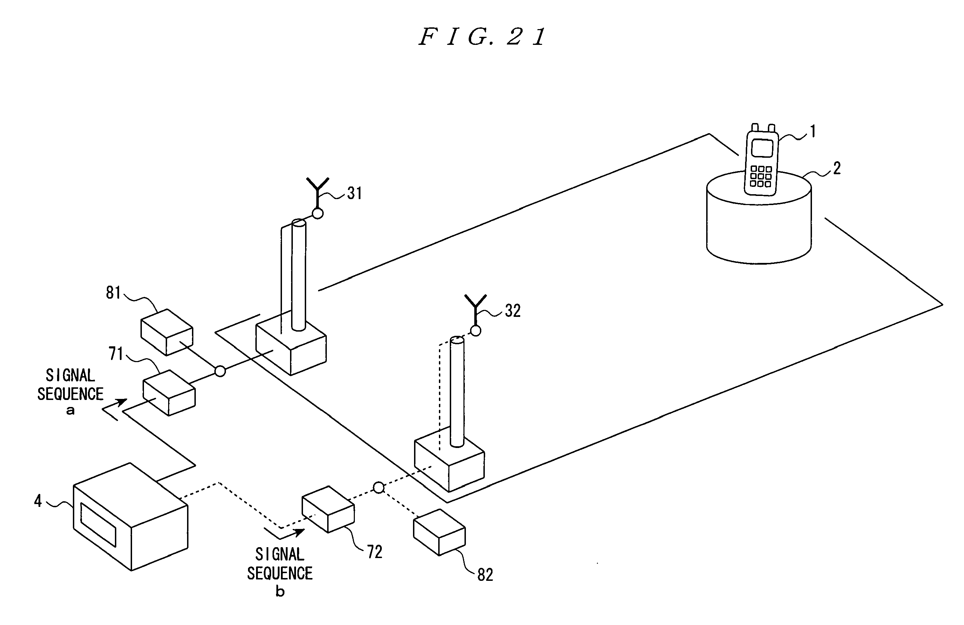

With reference to FIG. 21, an antenna measurement method in accordance with a third embodiment will be described. FIG. 21 illustrates an example of an antenna measurement system for implementing the antenna measurement method in accordance with the third embodiment. According to the present embodiment, in order to control the received signal quality in the device under test 1, variable attenuators 71 and 72, and interference signal generators 81 and 82 are provided between the transmitting antenna elements 31 and 32, and the pseudo base transceiver station 4. The variable attenuators 71 and 72 have a function of changing the strength of the signal outputted from the pseudo base transceiver station 4. The interference signal generators 81 and 82 have a function of changing the interference amount included in the signals outputted from the transmitting antenna elements 31 and 32. That is, in the present embodiment, the variable attenuators 71 and 72, as well as the interference signal generators 81 and 82 are used to measure the multi-antenna characteristics by changing the strength and the interference amount of the signals transmitted from the transmitting antenna elements 31 and 32 to the device under test 1.

In an actual propagation environment, a terminal is used under various conditions where the signal strength varies high to low areas. In addition, the terminal is used under various conditions where the amount of interference varies large to small areas, such as radio waves from a base transceiver station not to be communicated with, and other terminals. Therefore, the multi-antenna measurement has to consider various conditions about the signal strength and the interference amount.

With the multi-antenna measurement method in accordance with the present embodiment, it is made possible to utilize not only the variable attenuator 7 to control the signal strength about the signals outputted from the transmitting antenna elements 31 and 32 but also the interference signal generator 8 to control the interference amount included in the signals. This enables more faithful simulation of the radio wave state around the terminal in the actual propagation environment. It should be noted that the present embodiment is not limited to a case where both the signal strength and the interference amount are controlled, but at least one of them may be controlled.

Fourth Embodiment

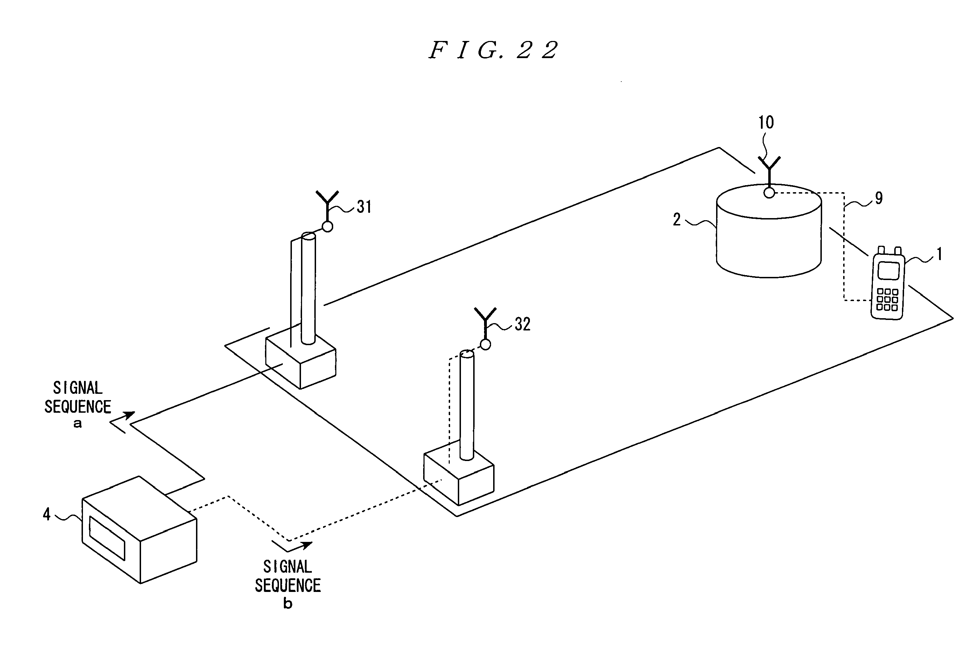

With reference to FIG. 22, an antenna measurement method in accordance with a fourth embodiment will be described. FIG. 22 illustrates an example of an antenna measurement system for implementing the antenna measurement method in accordance with the fourth embodiment. In the present embodiment, the device under test 1 and a reference antenna 10 connected via a connection cable 9 are employed.

For reference measurement with the use of the reference antenna 10, in the same manner as in the device under test 1 in the first embodiment to the third embodiment, the reference antenna 10 is arranged at a position of the point of the apex angle of an isosceles triangle having the transmitting antenna positioned at the vertex of a base angle. Examples of the reference antenna 10 used for this reference measurement may include a half-wave dipole antenna which is the most basic antenna.

The radio performance excluding the antennas about the device under test 1 is measurable by performing this reference measurement and correcting a gain of the reference antenna 10 or a loss of the connection cable 9. When the reference measurement results are compared with the results obtained by the first embodiment to the third embodiment, the difference is caused by only the portion of the receiving antenna, since the same device under test 1 is used. Therefore, in the present embodiment, it is made possible to extract the difference in performance between the reference antenna 10 and the receive antennas mounted on the device under test 1. That is, in the present embodiment, an independent evaluation about the antenna portion of the device under test 1 is enabled.

The present invention is applicable to measurement of a multi-antenna performance in a simple manner.

**Claims**

1. A multi-antenna measurement method of measuring a device under test (1), having at least two receive antennas (11 a, 11 b), the method comprising:

   transmitting radio waves of two different uncorrelated signal sequences from positions of two base angles of an isosceles triangle toward the device under test (1) arranged at a position of a apex angle respectively; and
   measuring a received signal with a receive antenna (11a, 11b) of the device under test (1).

2. The multi-antenna measurement method according to claim 1, wherein the device under test (1) is rotated around a predetermined rotating shaft when a received power is measured.

3. The multi-antenna measurement method according to one of claims 1 and 2, wherein:

   one of the two different uncorrelated signal sequences is transmitted as a vertically polarized wave from one of the positions of the two base angles and as a horizontally polarized wave from the other of the positions; and
   the other of the two different uncorrelated signal sequences is transmitted as a horizontally polarized wave from one of the positions of the two base angles and as a vertically polarized wave from the other of positions.

4. The multi-antenna measurement method according to one of claims 1 and 2, wherein one of the two different uncorrelated signal sequences is transmitted from one of the positions of upper and lower positions spaced apart in the vertical direction from one of the positions of the two base angles of the isosceles triangle, and the other of the positions of the upper and lower positions spaced apart in the vertical direction from the other of the positions of the two base angles; and the other of the two different uncorrelated signal sequences is transmitted from the other of the positions of the upper and lower positions spaced apart in the vertical direction from one of the positions of the two base angles of the isosceles triangle, and one of the positions of the upper and lower positions spaced apart in the vertical direction from the other of the positions of the two base angles.

5. The multi-antenna measurement method according to one of claims 1 and 2, wherein one of the two different uncorrelated signal sequences is transmitted:

   as a vertically polarized wave from one of the positions of upper and lower positions spaced apart in the vertical direction from one of the positions of the two base angles of the isosceles triangle, and as a horizontally polarized wave from the other of the positions of the upper and lower positions spaced apart in the vertical direction;
   as a horizontally polarized wave from one of the positions of the upper and lower positions spaced apart in the vertical direction from the other of the positions of the two base angles of the isosceles triangle, and as a vertically polarized wave from the other of the positions of the upper and lower positions spaced apart in the vertical direction; and

wherein the other of the two different uncorrelated signal sequences is transmitted:

   as a vertically polarized wave from one of the positions of the upper and lower positions spaced apart in the vertical direction from the other of the positions of the two base angles of the isosceles triangle, and as a horizontally polarized wave from the other of the positions of the upper and lower positions spaced apart in the vertical direction; and
   as a horizontally polarized wave from one of the positions of the upper and lower positions spaced apart in the vertical direction from one of the positions of the two base angles of the isosceles triangle, and as a vertically polarized wave from the other of the positions of the upper and lower positions spaced apart in the vertical direction.

6. The multi-antenna measurement method according to any one of claims 1 to 5, wherein received signal quality information indicating a quality of the received signal is generated in the device under test, and the generated received signal quality information is transmitted to a transmission side of the radio waves of the two different uncorrelated signal sequences.

7. The multi-antenna measurement method according to claim 6, wherein the received signal quality information is demodulated at the transmission side of the radio waves of the two different uncorrelated signal sequences, and an optimal modulation scheme and an optimal coding rate are selected according to the demodulated received signal quality information.

8. The multi-antenna measurement method according to any one of claims 1 to 7, wherein at least one of strength of the signal to be transmitted and amount of interference included in the signal to be transmitted is changed at the transmission side of the radio waves of the two different uncorrelated signal sequences.

9. The multi-antenna measurement method according to any one of claims 1 to 6, wherein measurement results by providing a reference antenna (10) at a position of the apex angle of the isosceles triangle are compared with measurement results by the device under test (1).

10. A multi-antenna measurement system for measuring a device under test (1) having at least two receive antennas (11 a, 11 b), the system comprising a transmitter (31, 32) which transmits radio waves of two different uncorrelated signal sequences from positions of two base angles of an isosceles triangle toward the device under test (1) provided at a position of a apex angle, the system measuring received signals with the receive antennas (11 a, 11 b) of the device under test (1).

EP 2 178 222 A1

*F I G. 1*

SIGNAL
SEQUENCE
a

SIGNAL
SEQUENCE
b

*F I G. 2A*

*F I G. 2B*

11a
11b

1

16

DISPLAY
SECTION

14

COMMUNICATION
SECTION

15

INPUT
SECTION

CONTROLLER
17

1

EP 2 178 222 A1

EP 2 178 222 A1

*F I G. 3*

z
y
x

11a

11b

SLEEVE ANTENNA          SLOT ANTENNA

*F I G. 4*

_____ VERTICALLY POLARIZED
       COMPONENT

_ _ _ _ HORIZONTALLY POLARIZED
        COMPONENT

y
x

y
x

SLEEVE ANTENNA 11a          SLOT ANTENNA 11b

15

*F I G. 5*

*FIG. 6B*

ANGULAR SPREAD

ANGLE

TWO-WAVE MODEL

POWER

*FIG. 6A*

ANGULAR SPREAD

ANGLE

LAPLACE DISTRIBUTION MODEL

POWER

FIG. 7A

FIG. 7B

FIG. 7C

·········· CALCULATED VALUES
(LAPLACE DISTRIBUTION MODEL)

——— CALCULATED VALUES
(TWO-WAVE MODEL)

○ MEASURED VALUES

RECEIVE ANTENNAS SPACED AT 0.2 WAVELENGTH

RECEIVE ANTENNAS SPACED AT 0.5 WAVELENGTH

RECEIVE ANTENNAS SPACED AT 1.0 WAVELENGTH

TERMINAL MOUNTING ANGLE [deg]

ANTENNA CORRELATION

F I G. 8

FIG. 9

EP 2 178 222 A1

# F I G. 1 0

CALCULATED VALUES ——— CONFIGURATION A -------- CONFIGURATION B

# F I G. 1 1

SIGNAL SEQUENCE a

SIGNAL SEQUENCE b

31-V
31-H
32-V
32-H
1
2
4
51
52

*F I G. 1 2*

| PAIR OF TRANSMITTING ANTENNA ELEMENTS | K1 | | K2 | |
|---|---|---|---|---|
| POLARIZED WAVES | V | H | V | H |
| CONFIGURATION A | a | b | b | a |
| CONFIGURATION B | a | a | b | b |

FIG. 13

EP 2 178 222 A1

*F I G. 1 4*

| TRANSMITTING ANTENNA ELEMENTS | 31 | 32 | 33 | 34 |
|---|---|---|---|---|
| SIGNAL SEQUENCES | a | b | a | b |

*F I G . 1 5*

*F I G. 1 6*

| PAIR OF TRANSMITTING ANTENNA ELEMENTS | K11 | | K12 | | K13 | | K14 | |
|---|---|---|---|---|---|---|---|---|
| POLARIZED WAVES | V | H | V | H | V | H | V | H |
| SIGNAL SEQUENCES | a | b | b | a | a | b | b | a |

*FIG. 17*

SIGNAL
SEQUENCE
a

SIGNAL
SEQUENCE
b

*F I G. 1 8*

FIG. 19

SIGNAL
SEQUENCE
a

SIGNAL
SEQUENCE
b

EP 2 178 222 A1

*FIG. 20*

# FIG. 21

SIGNAL
SEQUENCE
a

SIGNAL
SEQUENCE
b

EP 2 178 222 A1

*FIG. 23*

FIG. 24

EP 2 178 222 A1

FIG. 25

EP 2 178 222 A1

Europäisches
Patentamt

European
Patent Office

Office européen
des brevets

# EUROPEAN SEARCH REPORT

Application Number

EP 09 01 2683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 2005 227213 A (MATSUSHITA ELECTRIC IND CO LTD) 25 August 2005 (2005-08-25) * abstract; figures 1,4,6,8,11 * * paragraphs [0005] - [0006], [0007] - [0008], [0040], [0048] - [0050] * | 1-10 | INV. H04B7/04 H04B17/00 |
| A | WO 2008/031112 A2 (QUALCOMM INC [US]; BREIT GREGORY ALAN [US]; FEENAGHTY DENNIS MICHAEL []) 13 March 2008 (2008-03-13) * paragraphs [0025], [0026], [0030], [0032], [0036], [0076], [0090] - [0096], [0122] * | 1-10 | |
| A | US 2008/056340 A1 (FOEGELLE MICHAEL [US]) 6 March 2008 (2008-03-06) * the whole document * | 1-10 | |
| A | MARTIN A K WILES ED - HRISTOS T ANASTASSIU: "Over-the-air performance Test and measurement requirements on wireless devices" ANTENNAS AND PROPAGATION, 2006. EUCAP 2006. FIRST EUROPEAN CONFERENCE ON, IEEE, PISCATAWAY, NJ, USA, 6 November 2006 (2006-11-06), pages 1-4, XP031294687 ISBN: 978-92-9092-937-6 * the whole document * | 1-10 | |
| A | ANONYMOUS: "Radiowave Propagation - Path Loss - Measurement, Validation, Presentation;TIA-845" 1 May 2004 (2004-05-01), , XP017000688 * the whole document * | 1-10 | |
| A | US 2002/160717 A1 (PERSSON ANDERS [SE] ET AL) 31 October 2002 (2002-10-31) * the whole document * | 1-10 | |

TECHNICAL FIELDS
SEARCHED (IPC)

H04B

The present search report has been drawn up for all claims

| Place of search | Date of completion of the search | Examiner |
|---|---|---|
| The Hague | 1 February 2010 | Losada Corderí, Iker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

37

## ANNEX TO THE EUROPEAN SEARCH REPORT
## ON EUROPEAN PATENT APPLICATION NO.

EP 09 01 2683

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2010

| Patent document cited in search report | | Publication date | Patent family member(s) | | Publication date |
|---|---|---|---|---|---|
| JP 2005227213 | A | 25-08-2005 | NONE | | |
| WO 2008031112 | A2 | 13-03-2008 | EP 2060035 A2 | | 20-05-2009 |
| | | | KR 20090068238 A | | 25-06-2009 |
| | | | US 2008129615 A1 | | 05-06-2008 |
| US 2008056340 | A1 | 06-03-2008 | NONE | | |
| US 2002160717 | A1 | 31-10-2002 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2005227213 A

**Non-patent literature cited in the description**

• **K. Kalliola et al.** *IEEE Trans. VT.,* September 2002, vol. 51 (5